# EUROPEAN PATENT APPLICATION

(11) **EP 4 741 229 A1**
(43) Date of publication of application: **13.05.2026**
(21) Application number: 25199745.8
(22) Date of filing: 02.09.2025
(51) Int. Cl.: B60R 1/074

(54) **ACTUATOR ASSEMBLY, EXTERIOR REAR-VIEW MIRROR AND VEHICLE**

(30) Priority: 08.11.2024 DE 102024132658
(71) Applicant: Motherson Innovations Company Limited, London E14 5HU (GB)
(72) Inventor: LEE, Kyung Jun, 14523 Bucheon-si Gyeonggi-do (KR); RHEE, Geonhwan, 14523 Bucheon-si Gyeonggi-do (KR); SONG, Hongjun, 14523 Bucheon-si Gyeonggi-do (KR)
(74) Representative: Weber-Bruls, Dorothée

(57) **Abstract**

The present disclosure relates to an actuator assembly (100) for rotating an exterior rear-view mirror head (102) mounted on a vehicle (200). The assembly comprises:

at least one tilt worm gear (104);

at least one tilt pinion gear (106) with external surface (106a) meshing at least partly with the worm gear (104), and internal surface (106b);

at least one tilt shaft (110) with a central shaft (110b) having a first end (110f), a second end (110s) connectable to the mirror head (102), and a first axis of rotation (A-A);

at least one tilt cover (140) with a primary bore (140a) coupling to the first end (110f) of the central shaft (110b) along axis A-A.

The assembly further includes at least one arc-shaped member (108) with external surface (108a) coupled to the pinion gear's internal surface (106b), internal surface (108b), and end faces (108c). The arc-shaped member (108) and tilt pinion gear (106) share a second axis of rotation (B-B). The tilt cover (140) has an auxiliary shaft (140b) mounting the arc-shaped member's internal surface (108b) along axis B-B. The arc-shaped member (108) engages or disengages the tilt pinion gear (106) with the auxiliary shaft (140b) to transmit or stop rotational motion from the pinion gear to the tilt shaft (110).

## Description

The present disclosure relates to an actuator assembly for an exterior rear-view mirror according to the pre-amble of claim 1. Further, the present disclosure relates to an exterior rearview mirror with such an actuator assembly as well as to a vehicle with such an exterior rearview mirror.

Actuator assemblies have been used in exterior rear-view mirror from decades. An actuator assembly enables automatic folding and tilting of the exterior rear-view mirror. The actuator assembly involves multiple driving trains to achieve the automatic folding and tilting of the exterior rear-view mirror.

The existing tilting drive train involves a tilt worm gear driving a tilt pinion gear. Further, the tilt pinion gear is configured with a tilt shaft. Further, the tilt shaft is configured to connect with an exterior rear-view mirror. The existing tilting drive train comes up with a plurality of challenges. Firstly, in a scenario of over driving of the tilt worm gear to the tilt pinon gear due to motor malfunction or any similar reason, the friction and the shear stress between the tilt worm gear and the tilt pinion gear increases excessively. Secondly, in a scenario of the tilt pinion gear at an extreme position due to physical stoppage by stoppers, the driving of the tilt pinion gear by the tilt worm gear increases the friction and the shear stress excessively, due to back reaction from the stoppers. Thirdly, the manual tilting of the exterior rear-view mirror from outside results in excessive shear stress between the tilt worm gear and tilt pinion gear.

For example, US10315575B2 discloses the exterior rearview mirror system for the vehicle includes an exterior rearview mirror assembly having a mounting portion mountable at a side of a vehicle and a mirror head portion pivotally adjustable relative to the mounting portion.

JP2023000254A provides a mirror surface angle adjustment unit of the exterior rearview mirror which can increase distances that rods move forward or rearward.

US11628720B2 relates to an adjustment device for adjusting an air influencing element of a motor vehicle between at least a first position and a second position, comprising a driving unit for adjusting the air influencing element between at least the first position and the second position, provided with an input shaft and an output shaft which is at a distance from the axis of the input shaft, wherein the driving unit has a first part which is provided around the input shaft of the driving unit, and has a second part which is provided around the output shaft of the driving unit, wherein the adjustment device is furthermore provided with a failsafe mechanism, wherein the failsafe mechanism engages the first part of the driving unit.

Therefore, there is a need to develop an improved actuator assembly with reduced friction and shear stress between gear parts of the assembly leading to an improved reliability even in high stress situations..

Hence, it is an object of the present disclosure to further develop the known actuator assembly to overcome at least partly the known drawbacks of the prior art. In particular it is the object to develop an actuator assembly for an exterior rear-view mirror which reduces friction and shear stress between the tilt worm gear and the tilt pinion gear
i) in a scenario of over driving of the tilt worm gear onto the tilt pinon gear,
ii) on driving the tilt pinion gear at extreme ends, and/or
iii) on manual tilting of the exterior rear-view mirror from outside.

This object is solved by the characterizing features of claim 1, with at least one arc-shaped member having at least an external surface, an internal surface and two end faces, wherein the external surface of the arc-shaped member is coupled at least partly with the internal surface of the tilt pinion gear, the rotation axis of the arc-shaped member and the tilt pinion gear coincides with a second axis of rotation, the at least one tilt cover comprises an auxiliary shaft, the auxiliary shaft is configured to mount the internal surface of the arc-shaped member to coincide with the second axis of rotation, and the arc-shaped member is configured to engage or disengage the tilt pinion gear with the auxiliary shaft to transmit rotational motion or stop transmission of rotational motion from the tilt pinion gear to the tilt shaft. Mounting and coupling is to be understood as at least indirectly or partly directly or directly. Thus, the auxiliary shaft may be configured to mount at least indirectly the internal surface of the arc-shaped member to coincide with the second axis of rotation. Mounting means that there does not have to be any contact between the two components. It depends on the coinciding with the second axis of rotation. Analogously, the external surface of the arc-shaped member may be coupled at least partly and/or at least indirectly with the internal surface of the tilt pinion gear.

**In** an aspect the arc-shaped member may comprise at least one ring spring being optionally press fitted to the tilt pinion gear, and/or the external surface of the arc-shaped member may be frictionally coupled with the internal surface of the tilt pinion gear around the second axis of rotation.

According to an embodiment the internal surface of the tilt pinion gear may comprise at least one wedge shaped member, with in particular the wedge shaped member being configured to abut at least partly against at least one of the two end faces of the arc-shaped member and/or wherein at least one gap may be provided between at least one of the two end faces of the arc-shaped member and the wedge shaped member.

It may be advantageous that the tilt worm gear may be configured to act on the tilt pinion gear to rotate the tilt shaft about the first axis of rotation, when the arc-shaped member engages the auxiliary shaft with the tilt pinion gear, and the tilt worm gear may be configured to act on the tilt pinion gear to rotate the tilt pinion gear about the second axis of rotation, when the arc-shaped member disengages the auxiliary shaft from the tilt pinion gear.

Further, it is proposed that the arc-shaped member may be elastic, wherein the elastic nature of the arc-shaped member may be configured to enable engaging or disengaging of the tilt pinion gear with the auxiliary shaft which optionally in return correspondingly enables or stops transfer of rotational motion from the tilt pinion gear to the tilt shaft.

In another aspect, when the rotational torque received by the arc-shaped member may be less than a resisting torque of the arc-shaped member, the arc-shaped member may be configured to retain its shape thereby engaging with the auxiliary shaft to enable transfer of rotational motion from the tilt pinion gear to the auxiliary shaft tilt shaft, and when the rotational torque received by the arc-shaped member may be more than the resisting torque of the arc-shaped member, the arc-shaped member may be configured to expand to disengaging with the auxiliary shaft to stop transfer of rotational motion from the tilt pinion gear to the tilt shaft.

Further, in an event of motor malfunction, when the tilt pinion gear may transmit a torque higher than the resisting torque of the arc-shaped member to the arc-shaped member, the arc-shaped member may be configured to disengage from the auxiliary shaft and the transfer of the rotational motion from the tilt pinion gear to the tilt shaft stops, such that the tilt worm gear rotates the tilt pinion gear about the second axis of rotation.

Additionally, it is proposed that the actuator assembly may comprise at least one stopper for limiting the rotation of the tilt pinion gear physically, wherein optionally two stoppers are provided at two extreme ends or positions.

**In** an embodiment, when the tilt pinion gear may be at extreme ends of the tilt worm gear, the reaction force from the stopper(s) may cause the amount of torque reaching the arc-shaped member to exceed the resisting torque of the arc-shaped member, such that the arc-shaped member may disengage from the auxiliary shaft, the transfer of the rotational motion from the tilt pinion gear to the tilt shaft may stop, and the tilt worm gear may rotate the tilt pinion gear about the second axis of rotation.

**In** another embodiment, the central shaft may comprise a plurality of protrusions, and the tilt cover may comprise a plurality of cut-outs which is optionally configured to couple correspondingly at least partly with the plurality of protrusions.

It may be advantageous that the tilt shaft may further comprise an extended arm, wherein optionally the extended arm may comprise a primary shaft, and the auxiliary shaft may comprise a secondary bore which is configured to couple with the primary shaft.

Further, a tensioner may be placed between the two end faces and the wedge shaped member, wherein optionally the tensioner may be configured to secure the arc-shaped member with the tilt pinion gear.

**In** another aspect, the tensioner may comprise at least one hole and/or at least one clip, and/or the tensioner may be made of high carbon steel material and/or may be a U-shaped element.

According to an embodiment, the wedge shaped member may comprise at least one pin member and/or at least one recess.

It is further proposed, that the at least one pin member of the wedge shaped member may fit correspondingly into the at least one hole of the tensioner, and/or the at least one clip of the tensioner may fit correspondingly into the at least one recess of the wedge shaped member.

In another aspect the tilt shaft may further comprise at least one side wall guide, and the tilt cover may comprise a seating surface configured to receive at least partly the side wall guide.

In another embodiment, the tilt shaft may further comprise at least one raised surface having at least one orifice for applying synthetic oil to lubricate the tilt pinion gear, and/or the tilt cover further comprising at least one protruding seat surface with at least one orifice for applying synthetic oil to lubricate the tilt pinion gear.

According to the present disclosure an exterior rear view mirror is provided having at least one actuator assembly as disclosed above.

In an embodiment, when the exterior rear-view mirror may be tilted from outside, intending the tilt pinion gear to drive back the tilt worm gear, and the rotating torque may exceed the resisting torque of the arc-shaped member, the arc-shaped member may be configured to disengage from the auxiliary shaft, such that the transfer of the rotational motion from the tilt shaft to the tilt pinion gear may stop.

According to the present disclosure a vehicle is provided having at least one actuator assembly as disclosed above and/or exterior rear view mirror as disclosed above.

Accordingly, an aspect of present disclosure relates to an actuator assembly for an exterior rearview mirror, the actuator assembly comprising: a tilt worm gear; a tilt pinion gear having an external surface and internal surface, wherein the external surface of the tilt pinion gear meshes with the tilt worm gear; -an arc-shaped member having an external surface, internal surface and two end faces, wherein the external surface of the arc-shaped member is coupled with the internal surface of the tilt pinion gear around a second axis of rotation; and a tilt shaft comprising a central shaft, wherein the central shaft comprises a first end and a second end, wherein the second end of the central shaft is configured to connect to the exterior rear-view mirror, and the central shaft has a first axis of rotation, a tilt cover comprising a primary bore and an auxiliary shaft, wherein the primary bore is configured to couple with the first end of central shaft around the first axis of rotation, and the auxiliary shaft is configured to mount the internal surface of the arc-shaped member around the second axis of rotation, wherein the arc-shaped member is configured to engage / disengage the tilt pinion gear with the auxiliary shaft to transmit / stop rotational motion from the tilt pinion gear to the tilt shaft.

In an embodiment of the present disclosure, the internal surface of the tilt pinion gear may comprise a wedge shaped member, wherein the wedge shaped member is configured to abut against at least one of the two end faces of the arc-shaped member.

In an embodiment of the present disclosure, the tilt worm gear may be configured to drive the tilt pinion gear about the first axis of rotation of the tilt shaft when the arc-shaped member engages the auxiliary shaft with the tilt pinion gear.

In an embodiment of the present disclosure, the tilt worm gear may be configured to rotate the tilt pinion gear about the second axis of rotation when the arc-shaped member disengages the auxiliary shaft from the tilt pinion gear.

In an embodiment of the present disclosure, the central shaft may comprise a plurality of protrusions, and wherein the tilt cover comprises a plurality of cut-outs which is configured to couple correspondingly with the plurality of protrusions.

In an embodiment of the present disclosure, the tilt shaft further may comprise an extended arm, wherein the extended arm comprises a primary shaft, and wherein the auxiliary shaft comprises a secondary bore which is configured to couple with the primary shaft.

In an embodiment of the present disclosure, the wedge shaped member may comprise at least one pin member and at least one recess.

In an embodiment of the present disclosure the assembly may further comprise a tensioner placed between the two end faces and the wedge shaped member.

In an embodiment of the present disclosure, the tensioner may comprise at least one hole and at least one clip.

In an embodiment of the present disclosure, the at least one pin member of the wedge shaped member may fit correspondingly into the at least one hole of the tensioner, wherein the at least one clip of the tensioner fits correspondingly into the at least one recess of the wedge shaped member.

In an embodiment of the present disclosure, the tilt shaft may further comprise a side wall guide, and the tilt cover comprises a seating surface configured to receive the side wall guide.

In an embodiment of the present disclosure, the tilt shaft may further comprise a raised surface having at least one orifice for applying synthetic oil to lubricate the tilt pinion gear.

In an embodiment of the present disclosure, the tilt cover may further comprise a protruding seat surface with at least one orifice for applying synthetic oil to lubricate the tilt pinion gear.

In an embodiment of the present disclosure, the arc-shaped member may be elastic in nature.

In an embodiment of the present disclosure, the arc-shaped member may have at least one and/or a plurality of slots.

In an embodiment of the present disclosure, the extended arm may comprise at least one primary shaft having at least one secondary bore, and/or the auxiliary shaft is configured to couple at least partly and/or indirectly with the secondary bore of the primary shaft, and/or the rotational motion from the tilt pinion gear to the tilt shaft is provided at least partly directly to the tilt shaft and/or at least partly by means of the tilt cover.

In another embodiment an output axis of the actuator assembly and/or tilt shaft may lie on the tilt shaft and a first drive axis of the actuator assembly and/or tilt pinion gear and/or tilt shaft lies on the tilt cover, wherein optionally the primary shaft is coupled to the auxiliary shaft and optionally provides a third auxiliary axis, optionally being aligned with the drive axis, wherein optionally the tilt pinion gear drives at least partly the tilt cover optionally around a cover rotation axis, wherein the tilt cover optionally transmits at least partly the drive motion to the tilt shaft to rotate the tilt shaft at least partly around the output axis, and/or
the output axis of the actuator assembly and/or tilt shaft and a second drive axis of the actuator assembly and/or tilt pinion gear and/or tilt shaft both lie on the tilt shaft, wherein optionally the tilt cover provides a first auxiliary axis being aligned the output axis and a second auxiliary axis being aligned with the second drive axis, wherein optionally the rotational motion of the tilt pinion gear is at least partly transmitted directly to the tilt shaft, and/or the first and second auxiliary axes both lie in the tilt cover.

In yet another embodiment a primary shaft having a secondary bore, and the auxiliary shaft is configured to couple with the secondary bore of the primary shaft.

In an embodiment of the present disclosure, the at least one side wall comprises at least one first locking member, and the tilt cover comprises at least one second locking member configured to at least indirectly engage and/or snap-fit with the at least one first locking member.

In an embodiment of the present disclosure, the secondary bore of the primary shaft is configured to internally mount at least indirectly at least one spring pin.

It should be noted that the features set out individually in the following description can be combined with each other in any technically advantageous manner and set out other forms of the present disclosure. It should be understood, however, that the disclosure is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the disclosure. The figures are not necessarily drawn to scale. Like numbers used in the figures refer to like components. However, it will be understood that the use of a number to refer to a component in a given figure is not intended to limit the component in another figure labelled with the same number. The description further characterizes and specifies the present disclosure in particular in connection with the Figures.

Other aspects, advantages, and salient features of the present disclosure will become apparent to those skilled in the art from the following detailed description, which taken in conjunction with the annexed drawings, discloses exemplary embodiments of the disclosure, wherein:
- Fig. 1: shows a perspective view of a vehicle with an exterior rear-view mirror in accordance with an embodiment of the present disclosure.
- Fig. 2: shows a perspective view of an actuator assembly with a mirror base of the exterior rear-view mirror in accordance with an embodiment of the present disclosure.
- Fig. 3: shows a perspective view of the actuator assembly of Fig. 2.
- Fig. 4: shows an exploded view of the actuator assembly of Fig. 2, excluding a tilt worm gear.
- Fig. 5: shows another exploded view of the actuator assembly, from a different perspective compared to Fig. 4.
- Fig. 6a: shows a perspective view of a tilt pinion gear of the actuator assembly of Fig. 2.
- Fig. 6b: shows a perspective view of the tilt pinion gear of the actuator assembly of Fig. 2, coupled with an arc-shaped member.
- Fig. 7a: shows a perspective view of the arc-shaped member of Fig. 6b.
- Fig. 7b: shows a perspective view of normal and expanded configuration of the arc-shaped member of Fig. 7b, with an auxiliary shaft.
- Fig. 8: shows a perspective view of the tilt shaft of the actuator assembly of Fig. 2.
- Fig. 9: shows a perspective view of a tilt cover along with the arc-shaped member and the tilt pinion gear of the actuator assembly of Fig. 2.
- Figs. 10a and 10b: show perspective views of the tilt pinion gear of the actuator assembly of Fig. 2, at extreme ends in mesh with a tilt worm gear.
- Figs. 11a and 11b: show different perspective views of a tensioner of the actuator assembly of Fig. 2.
- Fig. 12: shows a perspective view of the tensioner and the tilt pinion gear of the actuator assembly of Fig. 2.
- Fig. 13: shows an exploded view of an actuator assembly, excluding a tilt worm gear in accordance with yet another embodiment.
- Fig. 14a: shows a mounting position of the arc-shaped member and the pinion gear of Fig. 6b.
- Fig. 14b: shows a mounting position of the arc-shaped member and the pinion gear of the actuator assembly of Fig. 13.
- Fig. 15: shows a spring pin internally mounted in a secondary bore of the actuator assembly of Fig. 13.
- Fig. 16: shows a groove on at least side wall of tilt shaft of the actuator assembly of Fig. 13 and at least one hook 140h on the tilt cover of the actuator assembly of Fig. 13.

The foregoing objects, features and advantages of the present disclosure will become more apparent from the following detailed description related to the accompanying drawings. However, various modifications may be applied to the present disclosure, and the present disclosure may have various embodiments of the present disclosure. Hereinafter, specific embodiments of the present disclosure, which are illustrated in the drawings, will be described in detail.

**In** the following description, for purposes of explanation, numerous specific details are set forth in order to provide a thorough understanding of the present disclosure. It will be apparent, however, to one skilled in the art that the present disclosure can be practiced without these specific details. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

In the drawings, the thicknesses of layers and regions may be exaggerated for clarity. When it is indicated that an element or layer is "on" or "above" another element or layer, this comprises a case in which another layer or element is interposed therebetween as well as a case in which the element or layer is directly above the other element or layer. In principle, reference signs designate elements throughout the specification. In the following description, the same reference signs are used to designate elements, which have the same function within the same idea illustrated in the drawings of each embodiment of the present disclosure.

When detailed description of known functions or configurations related to the present disclosure is deemed to unnecessarily blur the gist of the disclosure, the detailed description thereof will be omitted. Also, numerals (e.g., first, second, etc.) used in the description herein are merely identifiers for distinguishing one element from another element.

In addition, the terms "module" and "unit" used to refer to elements in the following description are given or used in combination only in consideration of ease of writing the specification, and the terms themselves do not have distinct meanings or roles.

Furthermore, the use of a singular term, such as, "a" is not to be interpreted as limiting the number of components or details of particular components. Additionally, various terms and/or phrases describing or indicating a position or directional reference such as, but not limited to, "top", "bottom", "front", "rear", "forward", "rearward", "end", "exterior", "inner", "left", "right", "vertical", "horizontal", etc. may relate to one or more particular components as seen generally from a user's vantage point during use or operation, and such terms and/or phrases are not to be interpreted as limiting, but merely as a representative basis for describing the disclosure to one skilled in the art. In addition, a suffix "region", "part", "unit" for a component used in the following description are given or mixed in consideration of only the ease of writing the specification, and do not have meanings or roles distinguished from each other.

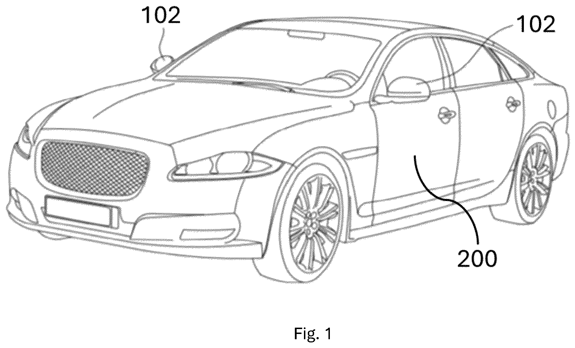

Fig. 1 shows a schematic view of a vehicle 200 in accordance with an embodiment of the present disclosure. The vehicle 200 referred to herein embodies a four-wheeled vehicle. Alternatively, the vehicle 200 may embody other vehicles, such as two-wheeled vehicles, threewheeled vehicles, six-wheeled vehicles, eight-wheeled vehicles, all-terrain vehicles ATVs, etc., without limiting the scope of the disclosure. Fig. 1 also shows two exterior rear-view mirrors 102 configured on the vehicle 200, one exterior rea-view mirror 102 mounted on each side of the vehicle 200.

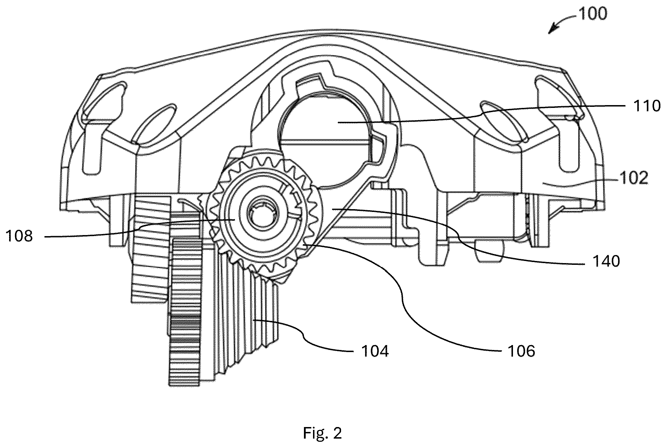

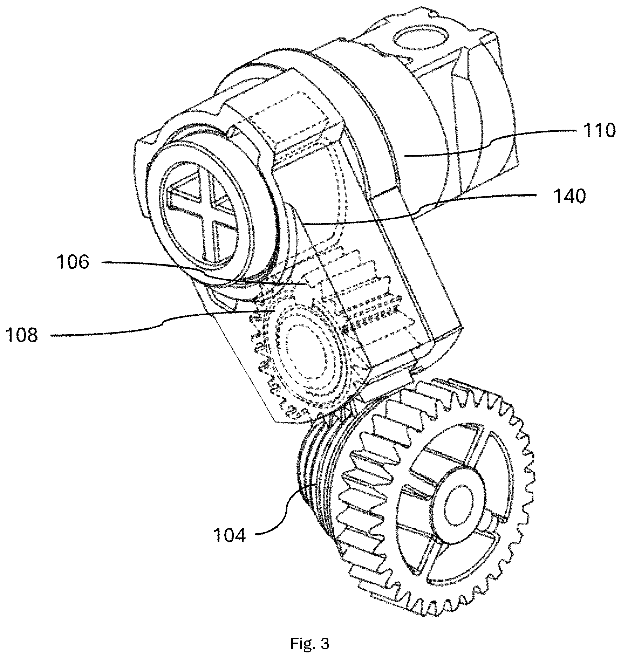

Fig. 2 shows a perspective view of an actuator assembly 100 with a mirror base of the exterior rear-view mirror 102. Fig. 3 shows a perspective view of the actuator assembly 100. As shown in Figs. 2 and 3, the actuator assembly 100 encompasses a tilt worm gear 104, a tilt pinion gear 106, an arc-shaped member 108, a tilt shaft 110 and a tilt cover 140.

The actuator assembly 100 may be configured inside a casing of the exterior rear-view mirror 102, i.e. the housing of the mirror head to be moved relative to the mirror base via the actuator assembly. In detail, the actuator assembly 100 is at least configured to allow tilting movement of the head of the exterior rear-view mirror 102 for adjusting a field of view provided to a driver of the vehicle 200 via each one of the two rear-view mirrors 102.

The tilt worm gear 104 is configured to receive torque from a power source (not shown). In an embodiment, the tilt worm gear 104 may receive the torque through a drive train from the power source. The tilt worm gear 104 may be a stepped cone gear. Further, the tilt worm gear 104 may be meshed with the tilt pinion gear 106 in order to transmit the received torque to the tilt pinion gear 106. The combination of the tilt worm gear 104 and the tilt pinion gear 106 acts as a reduction gear assembly, wherein the tilt worm gear 104 acts as a driver and the tilt pinion gear 106 acts as a driven gear. Furthermore, the rotation of the tilt pinion gear 106 may be physically limited by placing one or more stoppers, in particular two stoppers (not shown) at two extreme ends or positions. The implementation of said stopper(s) lies within the knowledge of a person skilled in the art.

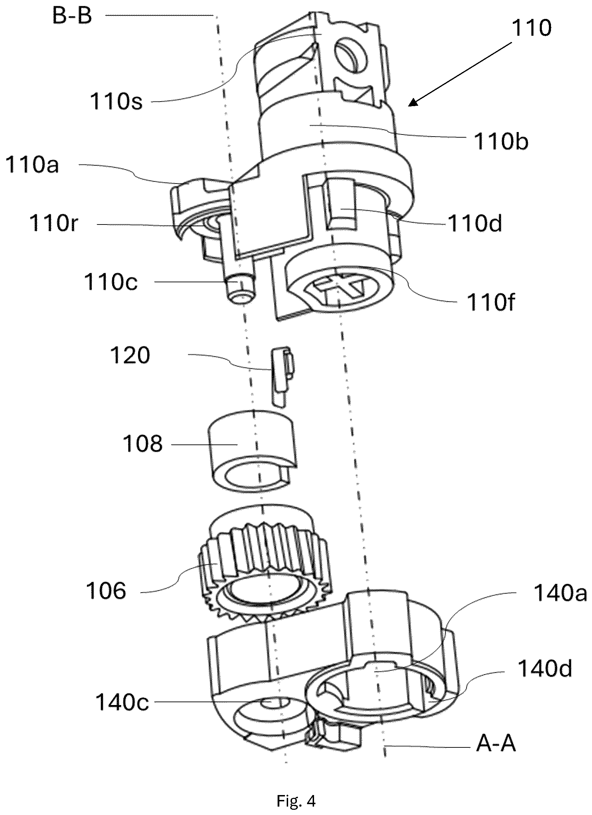

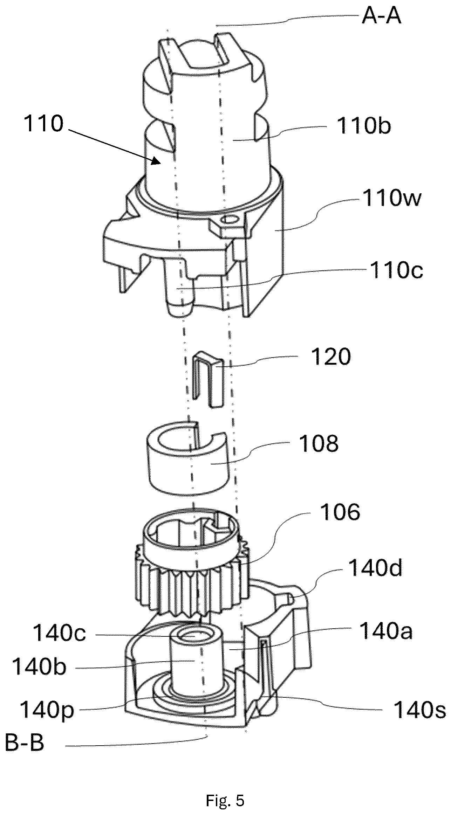

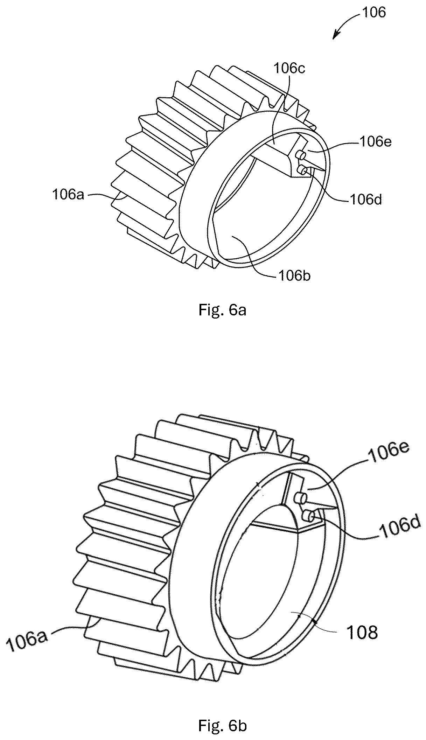

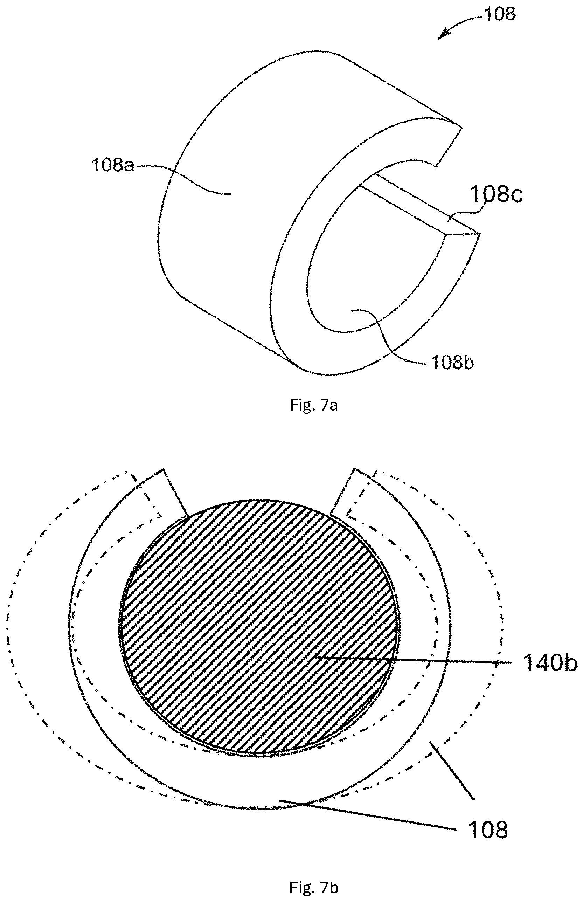

Figs. 4 and 5 each show an exploded views of the actuator assembly 100 (excluding the tilt worm gear 104), from two different perspectives. The actuator assembly 100, as shown in Figs. 4 and 5, illustrates the tilt pinion gear 106, the arc-shaped member 108, the tilt shaft 110, the tilt cover 140, and a tensioner 120. The tilt pion gear 106 is connected to the tilt cover 140 via the arc-shaped member 108 along a second axis of rotation B-B. Optionally, the tensioner 120 may be placed between two end faces 108c (see Fig. 7a) of the arc-shaped member 108 and wedge shaped member 106c (see Fig. 6a) of the tilt pinion gear 106. Further, the tilt cover 140 is connected to the tilt shaft 110 along a first axis of rotation A-A.

The tilt pinion gear 106, as shown in Fig. 6a, may have an external surface 106a and an internal surface 106b. The tilt pinion gear 106 may be made-up of a polymer material. In an embodiment, the tilt pinion gear 106 may be made-up of PA6 CF30. The external surface 106a of the tilt pinion gear 106 may be geared and meshed with the tilt worm gear 104. The internal surface 106b may comprise a wedge shaped member 106c. The wedge shaped member 106c may rise from the internal surface 106b. Further, the wedge shaped member 106c may comprise at least one pin member 106d and at least one recess 106e.

Further, as shown in Fig. 6b, the tilt pinion gear 106 may be frictionally coupled with the arc-shaped member 108. The arc shaped member 108 may be a ring spring and press fitted to the tilt pinion gear 106. Thereby, the external surface 108a of the arc-shaped member 108 may be frictionally coupled with the internal surface 106b of the tilt pinion gear 106. Further, there may be a gap between at least one end of the arc shaped member 108 and the wedge shaped member 106c. The gap may increase depending on the usage conditions such as number of adjustments, temperature and humidity environment of use and/or assembly tolerance. Backlash occurs due to the clearance when the ring spring overrides, and free play occurs when the mechanism is configured by driving and adjusting the tilt axle. Gear backlash may occur during deceleration of the tilt pinion gear and tilt worm gear 104. In an embodiment, due to the ring spring's tightening force, clearance management is required to cope with e.g. thermal expansion or contraction of the ring spring.

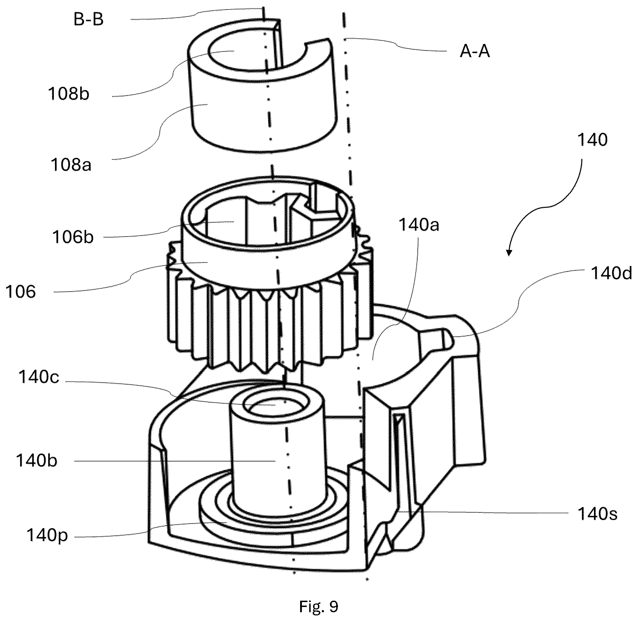

As shown in Fig. 7a, the arc-shaped member 108 may have an external surface 108a, an internal surface 108b and two end faces 108c. The arc-shaped member 108 may be a C-shaped member. The arc-shaped member 108 may be made up of an elastic material bearing elastic properties facilitating engaging or disengaging an auxiliary shaft 140b as indicated in Fig. 7b. In an embodiment, the arc-shaped member 108 may be made up of SK5 material. The external surface 108a of the arc-shaped member 108 may be frictionally coupled with the internal surface 106b of the tilt pinion gear 106 around a second axis of rotation B-B, as shown in Fig. 9.

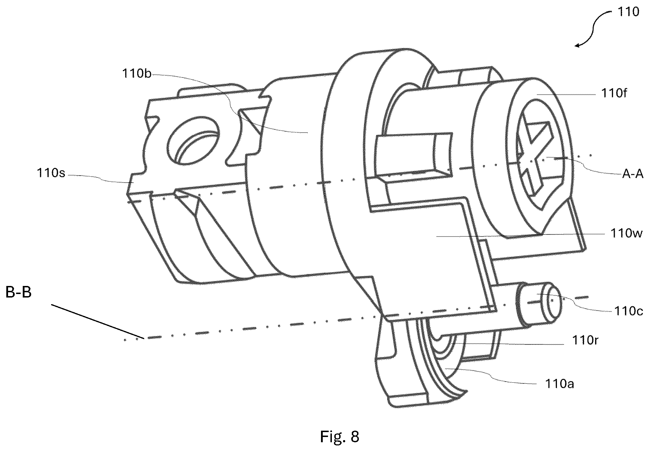

Further, as shown in Fig. 8, the tilt shaft 110 may have a central shaft 110b and an extended arm 110a. The central shaft 110b may have a first axis of rotation A-A. Further, the central shaft 110b may comprise a plurality of protrusions 110d. The central shaft 110b may have a first end 110f and a second end 110s. The second end 110s may be configured to connect to the not shown head of the exterior rear-view mirror 102. Further, the extended arm 110a may have a primary shaft 110c. The tilt shaft 110 may be made up of a polymer material. In an embodiment, the tilt shaft 110 may be made up of PA6 GF50 material. The tilt shaft 110 may also have a side wall guide 110w. Further, the tilt shaft 110 also comprise a raised surface 110r having at least orifice for applying synthetic oil to lubricate the tilt pinion gear 106. Further, the first end 110f of the central shaft 110b may be coupled with the tilt cover 140.

Further, as shown in Fig. 9, the tilt cover 140 may have a primary bore 140a (also shown in Fig. 4) and the auxiliary shaft 140b. The tilt cover 140 may be made up of a polymer material. In an embodiment, the tilt cover 140 may be made up of a PA6 GF65 material. The tilt cover 140 may comprise a plurality of cut-outs 140d which may be configured to couple correspondingly with the plurality of protrusions 110d of the central shaft 110b of the tilt shaft 110 (as shown in Fig. 4). The tilt cover 140 may also comprise a protruding seat surface 140p with at least one orifice for applying synthetic oil to lubricate the tilt pinion gear 106. Further, the tilt cover 140 may comprise a seating surface 140s configured to receive the side wall guide 110w of the tilt shaft 110 (as shown in Fig. 5). The primary bore 140a may be configured to couple with the first end 110f of central shaft 110b around the first axis of rotation A-A. The auxiliary shaft 140b may have a secondary bore 140c which may be configured to couple with the primary shaft 110c. Further, the auxiliary shaft 140b may be configured to co-axially mount the arc-shaped member 108 and the tilt pinion gear 106. The auxiliary shaft 140b may be configured to mount the internal surface 108b of the arc-shaped member 108 around the second axis of rotation B-B. Further, the external surface 108a of the arc-shaped member 108 may be frictionally coupled with the internal surface 106b of the tilt pinion gear 106 around the second axis of rotation B-B. Further, the at least one of the two end faces 108c of the arc-shaped member 108 may be configured to abut against the wedge shaped member 106c of the tilt pinion gear 106.

The elastic nature of the arc-shaped member 108 enables engaging or disengaging of the tilt pinion gear 106 with the auxiliary shaft 140b which in return correspondingly enables or stops transfer of rotational motion from the tilt pinion gear 106 to the tilt shaft 110. As shown in Fig. 7b with solid lines, the rotational torque received by the arc-shaped member 108 is less than the resisting torque of the arc-shaped member 108, the arc-shaped member 108 is configured to retain its shape thereby engaging with the auxiliary shaft 140b to enable transfer of rotational motion from the tilt pinion gear 106 to the auxiliary shaft tilt shaft 110. However, in an event of the rotational torque received by the arc-shaped member 108 is more than the resisting torque of the arc-shaped member 108, the arc-shaped member 108 is configured to expand as shown in Fig. 7b, shown with dotted lines, and thereby disengaging with the auxiliary shaft 140b to stop transfer of rotational motion from the tilt pinion gear 106 to the tilt shaft 110.

As shown in Figs. 2 and 3, the tilt worm gear 104 may drive the tilt pinion gear 106 to revolute about the first axis of rotation A-A of the tilt shaft 110 when the arc-shaped member 108 engages the auxiliary shaft 140b with the tilt pinion gear 106. In an event of motor malfunction, the tilt pinion gear 106 may transmit a torque, higher than the resisting torque of the arc-shaped member 108, to the arc-shaped member 108. This may result in disengaging of the arc-shaped member 108 with the auxiliary shaft 140b and the stoppage of transfer of the rotational motion from the tilt pinion gear 106 to the tilt shaft 110. This may cause the tilt worm gear 104 to rotate the tilt pinion gear 106 about the second axis of rotation B-B. This may also result in reduction of friction and shear stress between the tilt worm gear 104 and the tilt pinion gear 106.

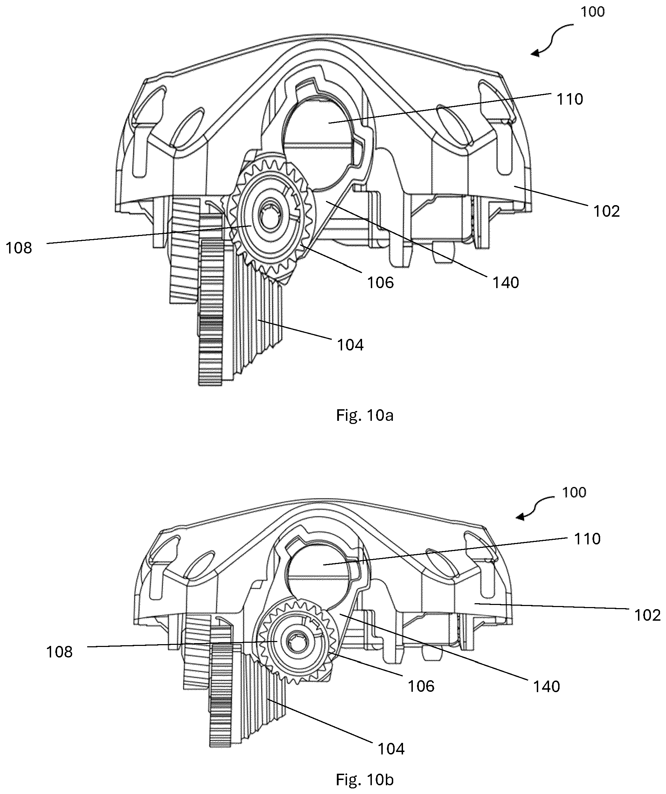

In another embodiment, wherein the tilt pinion gear 106 is at extreme ends of the tilt worm gear 104 as shown in Figs. 10a and 10b, the reaction force from the stopper may cause the amount of torque reaching the arc-shaped member 108 exceed the resisting torque of the arc-shaped member 108. This may result in disengaging of the arc-shaped member 108 with the auxiliary shaft 140b and the stoppage of transfer rotational motion from the tilt pinion gear 106 to the tilt shaft 140. This may cause the tilt worm gear 104 to rotate the tilt pinion gear 106 about the second axis of rotation B-B. This may also result in reduction of friction between the tilt worm gear 104 and the tilt pinion gear 106 caused due to back reaction.

In yet another embodiment, wherein the exterior rear-view mirror 102 may be tilted from outside, intending the tilt pinion gear 106 to drive back the tilt worm gear 104. This attempt of reverse rotation in the reduction gear assembly of the tilt worm gear 104 and the tilt pinion gear 106 may cause a rotating torque exceeding the resisting torque of the arc-shaped member 108. This may result in disengaging of the arc-shaped member 108 with the auxiliary shaft 140b and the stoppage of transfer of the rotational motion from the tilt shaft 140 to the tilt pinion gear 106. This may also lead to the reduction of shear stress between the tilt worm gear 104 and the tilt pinion gear 106.

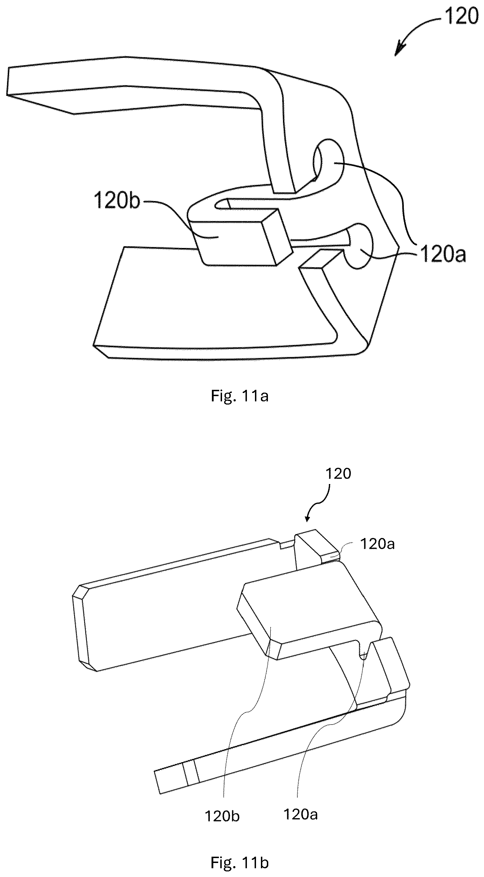

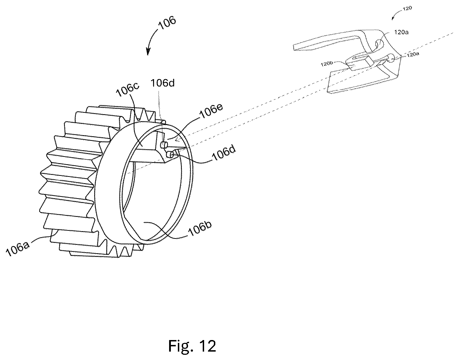

In yet another embodiment, the actuator assembly 100 may comprise of a tensioner 120 as shown in Figs. 11a and 11b. The tensioner 120 may be placed between the two end faces 108c of the arc-shaped member 108 and the wedge shaped member 106c. The tensioner 120 may tightly secure the arc-shaped member 108 with the tilt pinion gear 106. Further, the tensioner 120 may comprise at least one hole 120a and at least one clip 120b. Further, as shown in Fig. 12, the at least one hole 120a of the tensioner 120 may correspondingly couple with the at least one pin member 106d of the wedge shaped member 106c. Similarly, as shown in Fig. 12, the at least one clip 120b of the tensioner 120 may correspondingly be inserted into the at least one recess 106e of the wedge shaped member 106c. The tensioner 120 may be made of high carbon steel material. In an embodiment, the tensioner 120 may be made up of SK5 material. In an embodiment, the tensioner 120 may be a U-shaped element.

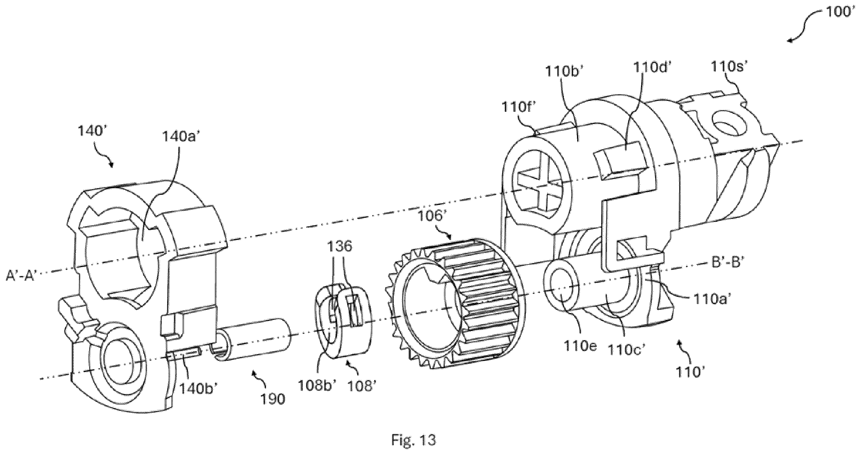

Fig. 13 illustrates an exploded view of another embodiment of an actuator assembly 100'. In the following, corresponding parts of the actuator assembly 100' use apostrophed reference signs of the actuator assembly 100 as described above. The actuator assembly 100', as shown in Fig. 13, illustrates a tilt pinion gear 106', an arc-shaped member 108', a tilt shaft 110', a tilt cover 140' and a spring pin 190. Further, the functioning and/or arrangement of the arc-shaped member 108', the tilt shaft 110', the tilt cover 140' may be at least partly analogue and/or same as explained in the previous embodiment e.g. as shown in Fig. 4 and described above. However, the embodiment illustrated in Fig. 13 encompasses improvements, e.g. in constructional features, that may relate to the tilt pinion gear 106', the arc-shaped member 108', the tilt shaft 110' and the tilt cover 140' and/or further parts of the actuator assembly 100'. According to various embodiments the other parts of the actuator assembly 100' and/or their functioning and/or their arrangement may be different or similar or the same as shown and described for the above embodiment of the actuator assembly 100 of Fig. 4.

The tilt pinion gear 106' may be connected to the tilt shaft 110' via the arc-shaped member 108' along the second axis of rotation B'-B'. Further, the tilt cover 140' may be connected to the tilt shaft 110' along the first axis of rotation A'-A'. Further, in an embodiment, the tilt pinion gear 106' may be made up of steel material. In an embodiment, the tilt pinion gear 106' may be made up of SMF5030 material. This results in strengthening the tilt pinion gear 106' and prevent deformation of the tilt pinion gear 106' at high temperature.

Further as shown in Fig. 13, the arc-shaped member 108' may have a plurality of slots 136. The plurality of slots 136 in the arc-shaped member 108' improves flexibility and responsiveness when the arc-shaped member 108' may frictionally couple with the tilt pinion gear 106' as explained in the previous embodiment of the actuator assembly 100. Further, the improvement in flexibility and responsiveness makes the arc-shaped member 108' wear resistant during engagement and dis-engagement with the tilt pinion gear 106'. Further, the arc-shaped member 108' may be superficially coated with a wear resistant material, optionally comprising at least one powder, or surface treated to increase its durability.

As shown in Fig. 13, the tilt shaft 110' may have a central shaft 110b' and an extended arm 110a'. The central shaft 110b' may have a first axis of rotation A'-A'. Further, the central shaft 110b' may comprise a plurality of protrusions 110d'. The central shaft 110b' may have a first end 110f' and a second end 110s'. The second end 110s' may be configured to connect to the head (not shown) of the exterior rear-view mirror 102 as shown in Fig. 1 or 2.

Further, the extended arm 110a' may have a primary shaft 110c'. Further, the tilt shaft 110c' may have a secondary bore 110e. Further, the secondary bore 110e may be configured to co-axially mount at least partly the arc-shaped member 108' and the tilt pinion gear 106'. The tilt shaft 110c' may be configured to externally mount at least partly an internal surface 108b' of the arc-shaped member 108' around the second axis of rotation B'-B'.

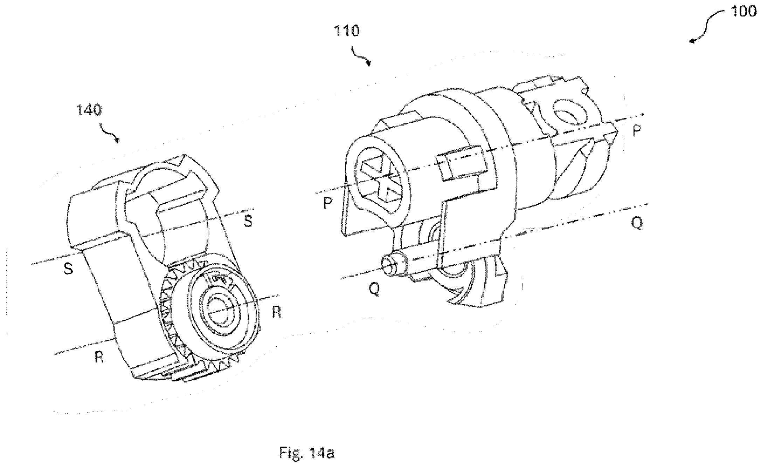

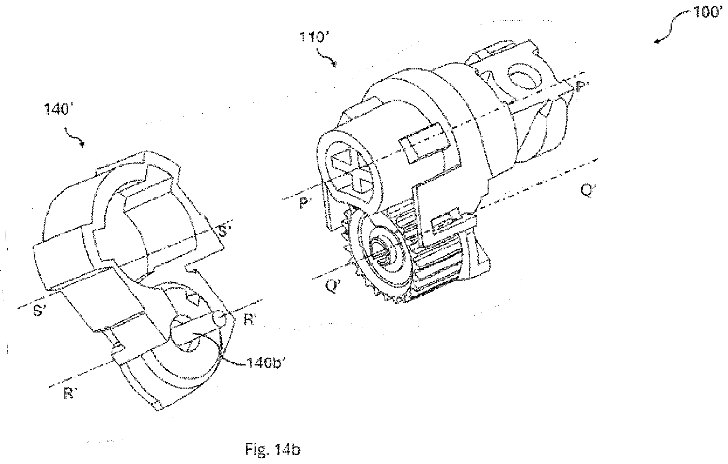

This changes the mounting, optionally the mounting position, from the auxiliary shaft 140b' to the tilt shaft 110c' compared to the mounting of the auxiliary shaft 140b of previous embodiment of the actuator assembly 100 as shown in Fig. 4 and decreases the cumulative tolerance. Figs. 14a and 14b show a comparison of the mountings of the auxiliary shaft 140b and 140b', wherein Fig. 14a shows a mounting position of the arc-shaped member 108 and the pinion gear 106 of the previous embodiment of the actuator assembly 100 of Fig. 6b and Fig. 14b shows a mounting position of the arc-shaped member 108' and the pinion gear 106' of the actuator assembly 100' of Fig. 13.

In the previous embodiment (as shown in Fig. 14a), the output axis P-P of the actuator assembly 100 lies on the tilt shaft 110, and the drive axis R-R of the actuator assembly 100 lies on the tilt cover 140. The primary shaft 110c coupled to the auxiliary shaft 140b provides a third auxiliary axis Q-Q being aligned with the drive axis R-R. Thereby, the tilt pinion gear 106 may drive the tilt cover 140 around the cover rotation axis S-S, which in turn transmits the drive motion to the tilt shaft 110 to rotate around output the axis P-P. As a result, the power transmission of the actuator assembly 100 follows the path R-R → S-S → P-P. Thus, the rotational motion from the tilt pinion gear 106 is provided to the tilt shaft 110 by means of the tilt cover 140. In various embodiments the rotation axis S-S as well as the output axis P-P may be aligned with the first axis of rotation A-A and the drive axis R-R as well as the third auxiliary axis Q-Q may be aligned with the second axis of rotation B-B.

However, in the embodiment of the actuator assembly 100' as shown in Fig. 14b, the output axis P'-P' and the drive axis Q'-Q' both lie on the tilt shaft 110'. The tilt cover 140' provides a first auxiliary axis S'-S' being aligned the output axis P'-P' and a second auxiliary axis R'-R' being aligned with the drive axis Q'-Q'. So, the power transmission process of the actuator assembly 100' follows the path Q'-Q' → P'-P'. Thus, the rotational motion from the tilt pinion gear 106' is provided to the tilt shaft 110' directly and not by means of the tilt cover 140'. As a result, the cumulative tolerance may be decreased. This decrease of cumulative tolerance may reduce the misalignment between the tilt cover 140' and the tilt shaft 110' due to shortening of the transmission process. In various embodiments the first auxiliary axis S'-S' as well as the output axis P'-P' may be aligned with the first axis of rotation A'-A' and the second auxiliary axis R'-R' as well as the drive axis Q'-Q' may be aligned with the second axis of rotation B'-B'.

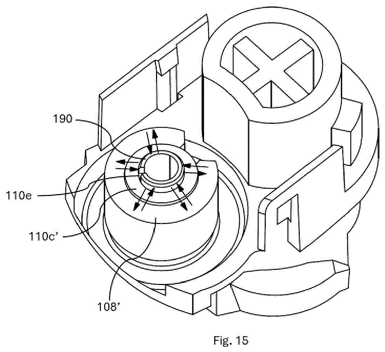

Further, in an embodiment as shown in Fig. 15, the secondary bore 110e of the primary shaft 110c' may be configured to internally mount the spring pin 190. More particularly, the spring pin 190 may be press-fitted into the secondary bore 110e. The spring pin 190 may be made up of steel material. The spring pin 190 prevents thermal deformation of the secondary bore 110e. More particularly, the spring pin 190 prevents the thermal distortion of the secondary bore 110e generated due to the frictional force (represented by arrows) between the arc-shaped member 108' and the primary shaft 110c'. Therefore, the spring pin 190 aids in making the primary shaft 110c' heat resistant.

Furthermore, the tilt cover 140', as shown in Fig. 13 and in Fig. 14b, may provide the primary bore 140a' and the auxiliary shaft 140b'. In an embodiment, the tilt cover 140' may be made up of a PA6 GF50 material. The primary bore 140a' of the tilt cover 140' may be configured to couple correspondingly with the central shaft 110b' of the tilt shaft 110'. The auxiliary shaft 140b' is configured to couple with the secondary bore 110e' of the primary shaft 110c'.

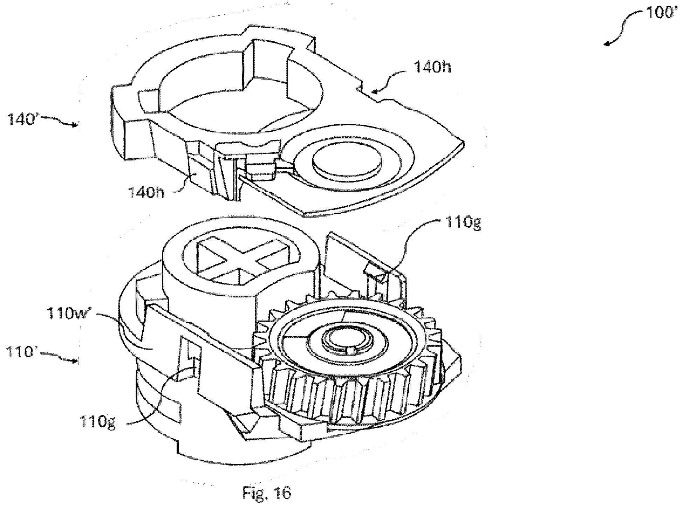

Furthermore, the tilt shaft 110' may be made up of PA6 GF30 material. Further, as explained in the previous embodiment of the actuator assembly 100 shown in Fig. 5, the tilt shaft 110, 110' may have the at least one side wall 110w, 110w. However, in addition or alternatively in the current embodiment of the actuator assembly 100' as shown in Fig. 16, the at least one side wall 110w' may have at least one first locking member 110g.

Furthermore, as shown in Fig. 16, the tilt cover 140' may also comprise at least one second locking member 140h configured to engage and/or snap-fit with the at least one first locking member 110g. In an embodiment, the first locking member 110g may have a hook and/or the second locking member 140h may have a groove. In another embodiment, the first locking member 110g may have a groove and/or the second locking member 140h may have a hook. The engagement provided by the locking members 110g, 140h, optionally comprising the snap-fit connection, prevents misalignment between the tilt shaft 110' and the tilt cover 140' by providing two holding points. Additionally, this results in cost reduction as the actuator assembly process is simplified, and the number of required parts are reduced.

In the following some embodiments of the present disclosure are briefly described:

### Embodiment 1:

An actuator assembly 100 for an exterior rear-view mirror 102, the actuator assembly 100 comprising: a tilt worm gear 104; a tilt pinion gear 106 having an external surface 106a and internal surface 106b, wherein the external surface 106a of the tilt pinion gear 106 meshes with the tilt worm gear 104; an arc-shaped member 108 having an external surface 108a, an internal surface 108b and two end faces 108c, wherein the external surface 108a of the arc-shaped member 108 is coupled with the internal surface 106b of the tilt pinion gear 106 around a second axis of rotation B-B; and a tilt shaft 110 comprising a central shaft 110b, wherein the central shaft 110b comprises a first end 110f and a second end 110s, wherein the second end 110s of the central shaft 110b is configured to connect to the exterior rear-view mirror 102, and the central shaft 110b has a first axis of rotation A-A, a tilt cover 140 comprising a primary bore 140a and an auxiliary shaft 140B, wherein the primary bore 140a is configured to couple with the first end 110f of central shaft 110b around the first axis of rotation A-A, and the auxiliary shaft 140b is configured to mount the internal surface 108b of the arc-shaped member 108 around the second axis of rotation B-B, wherein the arc-shaped member 108 is configured to engage / disengage the tilt pinion gear 106 with the auxiliary shaft 140b to transmit / stop rotational motion from the tilt pinion gear 106 to the tilt shaft 110.

### Embodiment 2:

The internal surface 106b of the tilt pinion gear 106 comprises a wedge shaped member 106c, wherein the wedge shaped member 106c is configured to abut against at least one of the two end faces 108c of the arc-shaped member 108.

### Embodiment 3:

The tilt worm gear 104 is configured to drive the tilt pinion gear 106 about the first axis of rotation A-A of the tilt shaft 110 when the arc-shaped member 108 engages the auxiliary shaft 140b with the tilt pinion gear 106.

### Embodiment 4:

The tilt worm gear 104 is configured to rotate the tilt pinion gear 106 about the second axis of rotation B-B when the arc-shaped member 108 disengages the auxiliary shaft 140b from the tilt pinion gear 106.

### Embodiment 5:

The central shaft 110b comprises a plurality of protrusions 110d, and wherein the tilt cover 140 comprises a plurality of cut-outs 140d which is configured to couple correspondingly with the plurality of protrusions 110d.

### Embodiment 6:

The tilt shaft 110 further comprises an extended arm 110a, wherein the extended arm 110a comprises a primary shaft 110c, and wherein the auxiliary shaft 140b comprises a secondary bore 140c which is configured to couple with the primary shaft 110c.

### Embodiment 7:

The wedge shaped member 106c comprises at least one pin member 106d and at least one recess 106e.

### Embodiment 8:

The actuator assembly 100 further comprises a tensioner 120 placed between the two end faces 108c and the wedge shaped member 106c.

### Embodiment 9:

The tensioner 120 comprises at least one hole 120a and at least one clip 120b.

### Embodiment 10:

The at least one pin member 106d of the wedge shaped member 106c fits correspondingly into the at least one hole 120a of the tensioner 120, wherein the at least one clip 120b of the tensioner 120 fits correspondingly into the at least one recess 106e of the wedge shaped member 106c.

### Embodiment 11:

The tilt shaft 110 further comprises a side wall guide 110w, and the tilt cover 140 comprises a seating surface 140s configured to receive the side wall guide 110w.

### Embodiment 12:

The tilt shaft 110 further comprises a raised surface 110r having at least one orifice for applying synthetic oil to lubricate the tilt pinion gear 106.

### Embodiment 13:

The tilt cover 140 further comprising protruding seat surface 140p with at least one orifice for applying synthetic oil to lubricate the tilt pinion gear 106.

### Embodiment 14:

The arc-shaped member 108 is elastic in nature.

### Embodiment 15:

The arc-shaped member 108 comprises a plurality of slots 136.

### Embodiment 16:

The extended arm 110a' comprises at least one primary shaft 110c' having at least one secondary bore 110e, and/or the auxiliary shaft 140b' is configured to couple at least partly and/or indirectly with the secondary bore 110e of the primary shaft 110c', and/or the rotational motion from the tilt pinion gear 106, 106' to the tilt shaft 110, 110' is provided at least partly directly to the tilt shaft 110, 110' and/or at least partly by means of the tilt cover 140, 140', and/or
an output axis P-P of the actuator assembly 100 and/or tilt shaft 110 lies on the tilt shaft 110 and a first drive axis R-R of the actuator assembly 100 and/or tilt pinion gear 106 and/or tilt shaft 110 lies on the tilt cover 140, wherein optionally the primary shaft 110c is coupled to the auxiliary shaft 140b and optionally provides a third auxiliary axis Q-Q, optionally being aligned with the drive axis R-R, wherein optionally the tilt pinion gear 106 drives at least partly the tilt cover 140 optionally around a cover rotation axis S-S, wherein the tilt cover 140 optionally transmits at least partly the drive motion to the tilt shaft 110 to rotate the tilt shaft 110 at least partly around the output axis P-P, and/or
the output axis P'-P' of the actuator assembly 100' and/or tilt shaft 110' and a second drive axis Q'-Q' of the actuator assembly 100' and/or tilt pinion gear 106' and/or tilt shaft 110' both lie on the tilt shaft 110', wherein optionally the tilt cover 140' provides a first auxiliary axis S'-S' being aligned the output axis P'-P' and a second auxiliary axis R'-R' being aligned with the second drive axis Q'-Q', wherein optionally
   o the rotational motion of the tilt pinion gear 106' is at least partly transmitted directly to the tilt shaft 110', and/or
   o the first and second auxiliary axes S'-S', R'-R' both lie in the tilt cover 140'.

### Embodiment 17:

The at least side wall 110w' comprises at least one first locking member 110g, and the tilt cover 140' comprises at least one second locking 140h configured to at least indirectly engage and/or snap-fit with the at least one first locking member 110g.

### Embodiment 18:

The secondary bore 110e of the primary shaft 110c' is configured to internally mount at least indirectly at least one spring pin 190.

### Embodiment 19:

A vehicle 200 having an actuator assembly 100 according to any of the previous embodiments.

Therefore, the present disclosure provides an actuator assembly for an exterior rear-view mirror which reduces friction and shear stress between the tilt worm gear and the tilt pinion gear in a scenario of over driving of the tilt worm gear to the tilt pinon gear. The present disclosure also provides an actuator assembly for an exterior rear-view mirror which reduces friction and shear stress between the tilt worm gear and the tilt pinion gear on driving the tilt pinion gear at extreme ends. The present disclosure also provides an actuator assembly for an exterior rearview mirror which reduces shear stress between the tilt worm gear and the tilt pinion gear on manual tilting from outside.

Although the subject matter of the present disclosure has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims, i.e. the features disclosed in the foregoing description, the claims, and the drawings may be essential, both individually and in any combination, for accomplishing the present disclosure in its various embodiments. The embodiments shown herein are only examples of the present disclosure and must therefore not be understood as being restrictive. Alternative embodiments considered by the skilled person are equally covered by the scope of protection of the present disclosure.

### REFERENCE SIGN LIST

- 100, 100': actuator assembly
- 102: exterior rear-view mirror
- 104: tilt worm gear
- 106, 106': tilt pinion gear
- 106a: external surface
- 106b: internal surface
- 106c: wedge shaped member
- 106d: pin member
- 106e: recess
- 108, 108': arc-shaped member
- 108a: external surface
- 108b, 108b': internal surface
- 108c: end face
- 110, 110': tilt shaft
- 110a, 110a': extended arm
- 110b, 110b': central shaft
- 110c; 110c': primary shaft
- 110d, 110d': plurality of protrusions
- 110f, 110f': first end
- 110g: first locking member
- 110r: raised surface
- 110s, 110s': second end
- 110w, 110w': side wall guide
- 120: tensioner
- 120a: hole
- 120b: clip
- 136: slots
- 140, 140': tilt cover
- 140a, 140a': primary bore
- 140b, 140b': auxiliary shaft
- 140c; 110e: secondary bore
- 140d: plurality of cut-outs
- 140h: second locking member
- 140s: seating surface
- 140p: protruding seat surface
- 190: spring pin
- 200: vehicle
- A-A, A'-A': first axis of rotation
- B-B, B'-B': second axis of rotation
- P-P, P'-P': output axis
- Q-Q: third auxiliary axis
- Q'-Q': drive axis
- R-R: drive axis
- R'-R': second auxiliary axis
- S-S: cover rotation axis
- S'-S': first auxiliary axis

## Claims

1. An actuator assembly (100, 100') configured for rotating an exterior rear-view mirror (102), in particular a head of the exterior rear-view mirror (102), mounted to a vehicle (200), the actuator assembly (100, 100') comprising:
- at least one tilt worm gear (104);
- at least one tilt pinion gear (106, 106') having at least an external surface (106a) and internal surface (106b), wherein the external surface (106a) of the tilt pinion gear (106, 106') meshes at least partly with the tilt worm gear (104);
- at least one tilt shaft (110, 100') comprising a central shaft (110b), wherein the central shaft (110b, 110b') comprises a first end (110f) and a second end (110s), wherein
the second end (110s) of the central shaft (110b, 110b') is configured to connect to the exterior rear-view mirror (102), in particular its head, and the central shaft (110b, 110b') has a first axis of rotation (A-A, A'-A'),
- at least one tilt cover (140, 140') comprising at least a primary bore (140a, 140a'), wherein
the primary bore (140a, 140a') is configured to couple at least partly with the first end (110f) of the central shaft (110b, 110b'), to coincide with the first axis of rotation (A-A, A'-A'),
**characterized by**
- at least one arc-shaped member (108, 108') having at least an external surface (108a), an internal surface (108b, 108b') and two end faces (108c), wherein
• the external surface (108a) of the arc-shaped member (108, 108') is coupled at least partly with the internal surface (106b) of the tilt pinion gear (106, 106'),
• the rotation axis of the arc-shaped member (108, 108') and the tilt pinion gear (106, 106') coincides with a second axis of rotation (B-B, B'-B'),
• the at least one tilt cover (140, 140') comprises an auxiliary shaft (140b, 140b'),
• the auxiliary shaft (140b, 140b') is configured to mount the internal surface (108b, 108b') of the arc-shaped member (108, 108') to coincide with the second axis of rotation (B-B),
and
• the arc-shaped member (108, 108') is configured to engage or disengage the tilt pinion gear (106, 106') with the auxiliary shaft (140b, 140b') to transmit rotational motion or stop transmission of rotational motion from the tilt pinion gear (106, 106') to the tilt shaft (110, 110').

2. The actuator assembly (100, 100') according to claim 1, wherein
the arc-shaped member (108, 108') comprises at least one ring spring being optionally press fitted to the tilt pinion gear (106, 106'), and/or
the external surface (108a) of the arc-shaped member (108, 108') is frictionally coupled with the internal surface (106b) of the tilt pinion gear (106, 106') around the second axis of rotation (B-B, B'-B'), and/or
the arc-shaped member (108') comprises at least one, preferably two or a plurality of slots (136).

3. The actuator assembly (100, 100') according to any one of the preceding claims,
wherein
the internal surface (106b) of the tilt pinion gear (106, 106') comprises at least one wedge shaped member (106c), with in particular the wedge shaped member (106c) being configured to abut at least partly against at least one of the two end faces (108c) of the arc-shaped member (108, 108') and/or
wherein at least one gap is provided between at least one of the two end faces (108c) of the arc-shaped member (108, 108') and the wedge shaped member (106c).

4. The actuator assembly (100, 100') according to any one of the preceding claims,
wherein
the tilt worm gear (104) is configured to act on the tilt pinion gear (106, 106') to rotate the tilt shaft (110, 110') about the first axis of rotation (A-A, A'-A'), when the arc-shaped member (108, 108') engages the auxiliary shaft (140b, 140b') with the tilt pinion gear (106, 106'), and/or
the tilt worm gear (104, 104') is configured to act on the tilt pinion gear (106, 106') to rotate the tilt pinion gear (106, 106') about the second axis of rotation (B-B, B'-B'), when the arc-shaped member (108, 108') disengages the auxiliary shaft (140b, 140b') from the tilt pinion gear (106, 106').

5. The actuator assembly (100, 100') according to any one of the preceding claims,
wherein
the arc-shaped member (108, 108') is elastic, wherein
the elastic nature of the arc-shaped member (108, 108') is configured to enable engaging or disengaging of the tilt pinion gear (106, 106') with the auxiliary shaft (140b, 140b') which in return correspondingly enables or stops transfer of rotational motion from the tilt pinion gear (106, 106') to the tilt shaft (110, 110'),
wherein optionally
when the rotational torque received by the arc-shaped member (108, 108') is less than a resisting torque of the arc-shaped member (108, 108'), the arc-shaped member (108, 108') is configured to retain its shape thereby engaging with the auxiliary shaft (140b, 140b') to enable transfer of rotational motion from the tilt pinion gear (106, 106') to the auxiliary shaft tilt shaft (110, 110'), and/or
when the rotational torque received by the arc-shaped member (108, 108') is more than the resisting torque of the arc-shaped member (108, 108'), the arc-shaped member (108, 108') is configured to expand to disengaging with the auxiliary shaft (140b, 140b') to stop transfer of rotational motion from the tilt pinion gear (106, 160') to the tilt shaft (110, 110').

6. The actuator assembly (100, 100') according to any one of the preceding claims,
wherein
the central shaft (110b, 110b') comprises a plurality of protrusions (110d, 110d'), wherein optionally
the tilt cover (140, 140') comprises a plurality of cut-outs (140d) which is configured to couple correspondingly at least partly with the plurality of protrusions (110d, 110d').

7. The actuator assembly (100) according to any one of the preceding claims, wherein the tilt shaft (110) further comprises an extended arm (110a), wherein optionally
the extended arm (110a) comprises at least one primary shaft (110c), and/or
the auxiliary shaft (140b) comprises at least one secondary bore (140c) which optionally is configured to couple with the primary shaft (110c).

8. The actuator assembly (100) according to any one of the preceding claims, wherein
an output axis (P-P) of the actuator assembly (100) and/or tilt shaft (110) lies on the tilt shaft (110) and a first drive axis (R-R) of the actuator assembly (100) and/or tilt pinion gear (106) and/or tilt shaft (110) lies on the tilt cover (140), wherein optionally the primary shaft (110c) is coupled to the auxiliary shaft (140b) and optionally provides a third auxiliary axis (Q-Q), optionally being aligned with the drive axis (R-R), wherein optionally the tilt pinion gear (106) drives at least partly the tilt cover (140) optionally around a cover rotation axis (S-S), wherein the tilt cover (140) optionally transmits at least partly the drive motion to the tilt shaft (110) to rotate the tilt shaft (110) at least partly around the output axis (P-P).

9. The actuator assembly (100') according to any one of the preceding claims 1 to 6,
wherein
the tilt shaft (110') further comprises an extended arm (110a'), wherein optionally
the extended arm (110a') comprises at least one primary shaft (110c') having at least one secondary bore (110e), and/or
the auxiliary shaft (140b') is configured to couple at least partly and/or indirectly with the secondary bore (110e) of the primary shaft (110c'), and/or
the rotational motion from the tilt pinion gear (106, 106') to the tilt shaft (110, 110') is provided at least partly directly to the tilt shaft (110, 110') and/or at least partly by means of the tilt cover (140, 140').

10. The actuator assembly (100') according to any one of the claims 1 to 6 or 9, wherein the output axis (P'-P') of the actuator assembly (100') and/or tilt shaft (110') and a second drive axis (Q'-Q') of the actuator assembly (100') and/or tilt pinion gear (106') and/or tilt shaft (110') both lie on the tilt shaft (110'), wherein optionally the tilt cover (140') provides a first auxiliary axis (S'-S') being aligned the output axis (P'-P') and a second auxiliary axis (R'-R') being aligned with the second drive axis (Q'-Q'), wherein optionally
o the rotational motion of the tilt pinion gear (106') is at least partly transmitted directly to the tilt shaft (110'), and/or
o the first and second auxiliary axes (S'-S', R'-R') both lie in the tilt cover (140').

11. The actuator assembly (100, 100') according to any one of the claims 3 to 10, with backreference to claim 3, **characterized by**
a tensioner (120) placed between the two end faces (108c) and the wedge shaped member (106c), wherein optionally
the tensioner (120) is configured to secure the arc-shaped member (108, 108') with the tilt pinion gear (106, 106'), and/or
the tensioner (120) comprises at least one hole (120a) and/or at least one clip (120b), and/or
the tensioner (120) is made of high carbon steel material and/or is a U-shaped element.

12. The actuator assembly (100, 100') according to any one of the claims 3 to 11, with backreference to claim 3, wherein
the wedge shaped member (106c) comprises at least one pin member (106d) and/or at least one recess (106e), wherein optionally
the at least one pin member (106d) of the wedge shaped member (106c) fits correspondingly into the at least one hole (120a) of the tensioner (120), and/or
the at least one clip (120b) of the tensioner (120) fits correspondingly into the at least one recess (106e) of the wedge shaped member (106c).

13. The actuator assembly (100, 100') according to any one of the preceding claims,
wherein
the tilt shaft (110, 110') further comprises at least one side wall guide (110w, 110w'), and
the tilt cover (140, 140') comprises a seating surface (140s) configured to receive at least partly the side wall guide (110w), and/or
the at least one side wall (110w') comprises at least one first locking member (110g),
the tilt cover (140') comprises at least one second locking member (140h) configured to at least indirectly engage and/or snap-fit with the at least one first locking member (110g), and/or
the tilt shaft (110, 110') further comprises at least one raised surface (110r) having at least one orifice for applying synthetic oil to lubricate the tilt pinion gear (106, 106'), and/or
the tilt cover (140, 140') further comprising at least one protruding seat surface (140p) with at least one orifice for applying synthetic oil to lubricate the tilt pinion gear (106, 106').

14. The actuator assembly (100) according to any one of the claims 9 to 13 with backreference to claim 9, wherein the secondary bore (110e) of the primary shaft (110c') is configured to internally mount at least indirectly at least one spring pin (190).

15. An exterior rear view mirror (102) having at least one actuator assembly (100, 100') according to any one of the preceding claims.

16. The exterior rear view mirror (102) according to claim 15, wherein
when the exterior rear-view mirror (102) is tilted from outside, intending the tilt pinion gear (106, 106') to drive back the tilt worm gear (104), and the rotating torque exceeds the resisting torque of the arc-shaped member (108, 108'), the arc-shaped member (108, 108') is configured to disengage from the auxiliary shaft (140b, 140b'), such that the transfer of the rotational motion from the tilt shaft (140, 140') to the tilt pinion gear (106, 106') stops.

17. A vehicle (200) having at least one
- actuator assembly (100, 100') according to any one of the claims 1 to 14 and/or
- exterior rear view mirror (102) according to claim 15 or 16.
